# EUROPEAN PATENT APPLICATION

(11) **EP 1 559 600 A2**
(43) Date of publication of application: **03.08.2005**
(21) Application number: 05250416.4
(22) Date of filing: 27.01.2005
(51) Int. Cl.: B60J 7/02, B62D 25/06

(54) **Vehicle roof arrangements**

(30) Priority: 27.01.2004 GB 0401756
(71) Applicant: Gruenhagel, Stefan, 32107 Bad Salzuflen (DE)
(72) Inventor: Hoge, Ralf, 42477 Radevormwald (DE)
(74) Representative: Foster, Mark Charles

(57) **Abstract**

A vehicle roof arrangement enables any one of a plurality of predetermined different roof types to be mounted on and with respect to a predetermined vehicle roof structure. The arrangement comprises (on each side of the roof opening) a sealing and securing part (38) having a relatively hard portion (38A) and a relatively softer portion (38B). A guide member (42) is bonded to a slidably movable roof panel (25A) and has a formation (44) slidable in a slot (46); where the roof type does not have a separately slidable panel (25A), a single roof panel is supported on each side by the securing and sealing part (38). In this case, the support (40) may support the slidable sunshield (50) (if the roof panel is transparent at least in part). Instead, it may support a black or coloured sheet adjacent the roof panel for altering its appearance, and the guide (42) is not provided.

## Description

The invention relates to vehicle roof arrangements. Embodiments of the invention, to be described in more detail below by way of example only, enable the same vehicle to be provided with any one of a number of different roof types without any significant structure or change to the vehicle body.

According to the invention, there is provided a vehicle roof arrangement, comprising roof sealing, securing and supporting means for sealing, securing and supporting any one of a plurality of predetermined different roof types on and with respect to a roof opening in a predetermined vehicle roof structure, the roof supporting, sealing and securing means having the same configuration for each of the roof types.

A vehicle arrangement embodying the invention, and providing a plurality of different possible roof types for a vehicle body, will now be described, by way of example only, with reference to the accompanying diagrammatic drawings in which:
Figure 1 is a perspective view from above of one of the roof types mounted in an opening in the top of the vehicle body;
Figure 2 is a cross-section through part of the frame along one side of the roof opening in the vehicle, showing part of the roof type of Figure 1;
Figure 3 corresponds to Figure 1 but shows the roof type of Figure 2 in an open configuration;
Figure 3A is a scrap view of part of the structure shown in Figure 3, taken in the direction of the arrow IIIA in Figure 3;
Figure 4 corresponds to Figure 1 but shows a second roof type.
Figure 5 is a cross-section corresponding to Figures 2 and 3 and shows part of the construction of the roof type of Figure 4;
Figure 6 corresponds to Figures 1 and 4 and shows a further roof type;
Figure 7 is a cross-section corresponding to Figures 2,3 and 5 and shows part of the construction of the roof type of Figure 6;
Figure 8 corresponds to Figures 1,4 and 6 and shows yet a further roof type; and
Figure 9 is a cross-section corresponding to Figures 2,3,5 and 7 and shows part of the construction of the roof type of Figure 8.

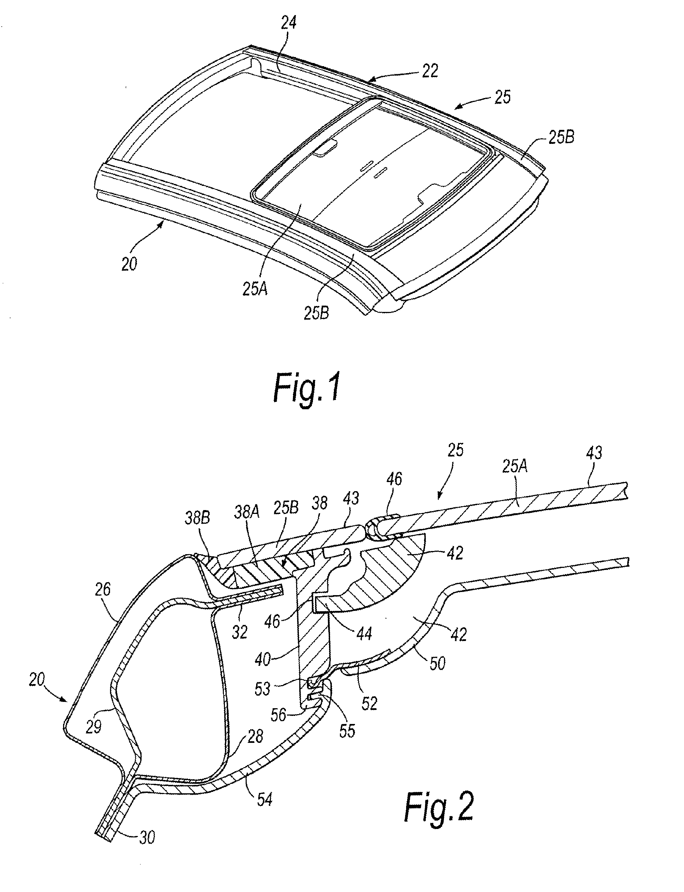

Figure 1 shows the upper part of a vehicle and, in particular, shows frame parts 20 and 22 running longitudinally along the upper part of the vehicle body to define an opening 24 for receiving a vehicle roof. As will be explained in more detail, the roof can be of any one of a plurality of different possible roof type which can be fitted into the roof opening 24 without modification to the frames defining the roof opening.

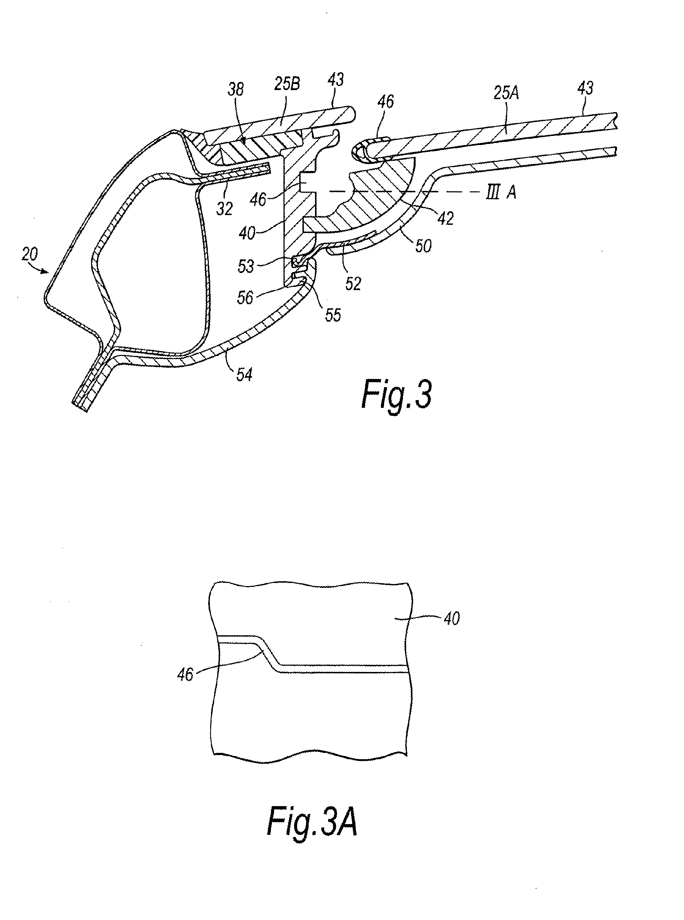

The roof type 25 shown in Figure 1 is transparent and includes a slidable transparent panel 25A. This slidable panel 25A can be slid under a fixed transparent panel (not shown) which covers the rearward part 24A of the opening 24. The roof type will be described in more detail with reference to Figures 2 and 3.

Figure 2 is a cross-section through the frame part 20 and also showing part of the roof itself. The frame part 20 comprises inner and outer body panels 26 and 28 and an intermediate strengthening panel part 29. These panel parts extend upwardly from and are integral with the vehicle panels defining the sides of the vehicle and the door openings (not shown). The panel parts 26,28 and 29 are joined together such as by welding or glueing to form a flange 30 above the side of the vehicle and a flange 32 which runs longitudinally along the vehicle and thus along one side of the roof opening 24.

The roof type 25 comprises a narrow edge roof panel 25B running longitudinally of the vehicle. The narrow roof panel 25B is fixed in position on the flange 32 by means of a securing and sealing strip 38 of moulded or possibly extruded plastics material having a region 38A which is relatively hard and a region 38B which is softer. The strip 38 is bonded to the panel 36 by polyurethane bonding material or other suitable adhesive and similarly bonded to the flange 32 (such bonding is omitted from Figures 2 and 3 for clarity). The softer part 38B provides weather-proof sealing between the edge of the roof panel 25B and the frame 20.

A relatively rigid support strip 40 also runs longitudinally of the roof opening and is bonded to the panel 25B and to the securing and sealing strip 38, again by polyurethane bonding material or other suitable adhesive.

The slidable panel 25A of the roof 25 is supported by a rigid moulded or possibly extruded guide member 42 to which it is bonded again by polyurethane or other suitable material. The guide member 42 has a distal shoulder 44 which is slidably located in a slot 46 in the support 40.

The slidable roof panel 25A carries a longitudinally extending seal 46 for making a weather-tight seal with the roof panel 25B.

It will be understood that, on the opposite side of the vehicle, the construction is the mirror-image of that shown in Figure 2.

The roof panels 25B (on each side of the vehicle) and 25A are advantageously made of polycarbonate which is rigid, strong, lightweight and transparent. Alternatively, the roof panels 25B and 25A could be made of glass or any other suitable transparent material.

If desired the polycarbonate forming the roof panel 36 may be provided with a coating. Such a coating may comprise a foil, sheet or film of material 43 which is applied (or laminated) to the outer (exterior) surface of the roof panels. The coating, foil, sheet or film 43 may be transparent or opaque and/or scratch resistant and/or UV shielding. The coating, foil, sheet or film 43 may be readily removable from the panels - so that the colour or appearance of the panel can be easily altered. In figure 1, the edge roof panel 25B has an opaque coating and main roof panel 25A has a transparent coating. The opaque edge roof panel 25B obscures the parts 32, 38 beneath it to improve the appearance of the roof.

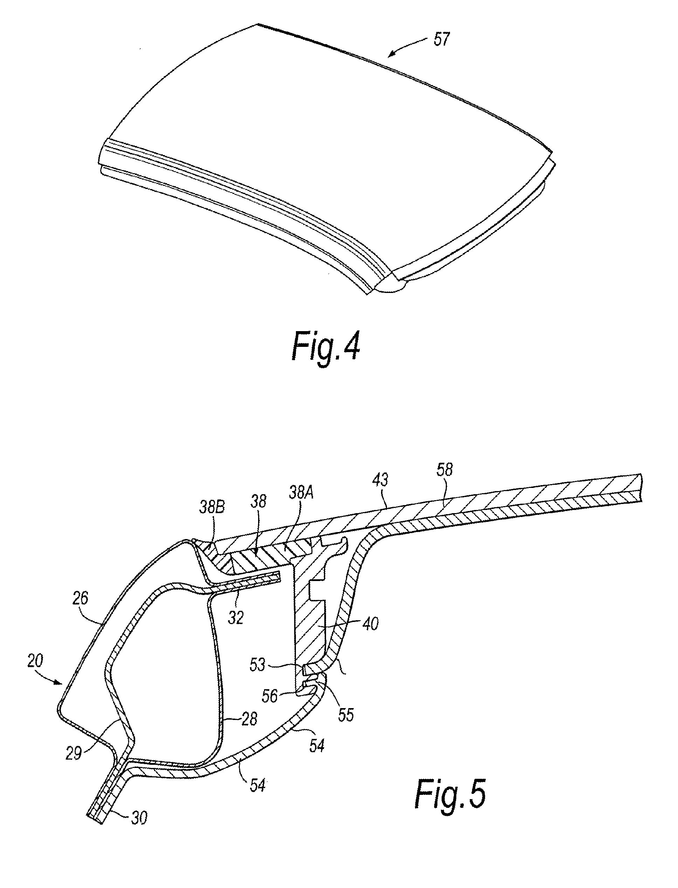

Figure 3 corresponds to Figure 2 but shows the roof 25 in the open position. As shown, the roof panel 25A has been lowered. This lowering is achieved by appropriate shaping of the guide 46, as shown in the scrap view of Figure 3A. The guide 46 is smoothly directed into a lower path along the guide 40. As the roof panel 25A is slid in a rearward direction to open the roof, it therefore becomes lowered, relative to the narrow panel 36, as shown in Figure 3. In this way, it can now pass below the fixed roof panel covering the rearward part of the roof opening 24. The fixed roof panel part is not shown in Figures 1 to 3. However, it may take the form of the fixed roof panels to be described with reference to Figures 4 to 7.

The roof type shown in Figures 1 to 3 advantageously includes a slidable sun shield 50. This is attached to a rigid guide member 52 which slides in a slot 53 along the lower edge of the support 40.

A vehicle trim part 54 extends between the lower edge of the guide 40 and the body panels where they come together at 30. The trim part 54 has an integral sideways projecting longitudinally extending lip 55 which is located in a slot 56 along the lower edge of the guide 40. A similar trim part would of course be provided on the opposite side of the roof opening.

Figure 4 corresponds to Figure 1 but shows a roof type 57 having a black roof. Figure 5 shows the corresponding construction. Parts in Figure 5 corresponding to those in Figures 2 and 3 are similarly referenced.

As shown in Figure 5, the roof panel comprises a single panel 58 instead of the separate roof panels 25B (one on each side of the roof opening) and 25A. However, as shown in Figure 5, the roof panel 58 is supported on the frame 20 (and the corresponding frame on the opposite side of the vehicle) in exactly the same way as that shown in Figures 2 and 3. Thus, the sealing and securing strip 38 and the support 40 are of the same construction as shown in Figures 2 and 3. The construction shown in Figure 5 does not of course need the guide 42 of Figures 2 and 3 because the roof panel 58 is fixed.

Advantageously, again, the roof panel 58 is made of polycarbonate and transparent. In order to provide the black appearance, though, a dense black roof lining 59 is provided, which is secured to the underside of the panel 58 and located in the slot 54 at the lower edge of the guide 40. Additionally or alternatively the black appearance of the roof is provided by applying a black coating or film 43 to the panel 58.

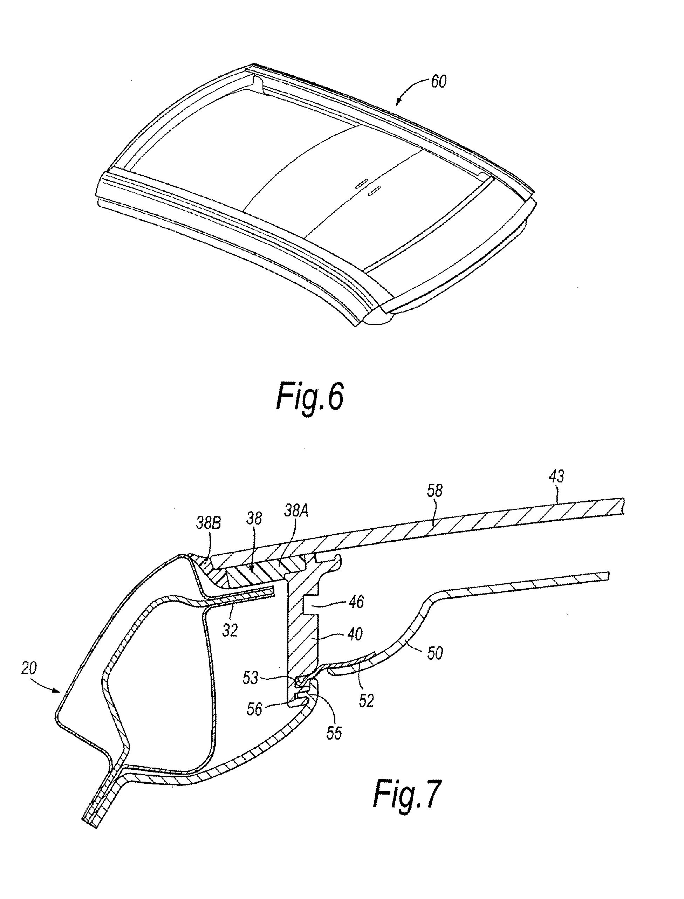

Figure 6 shows another roof type 60. In this case, the roof is fixed and completely transparent.

The construction of this roof type is shown in Figure 7. Again, the roof panel is supported in the same way as shown in Figures 2,3 and 5 and corresponding parts are similarly referenced. Figure 7 shows the transparent roof panel 58 (similar to the roof panel 58 of Figure 5) which again is advantageously made of polycarbonate. No roof lining corresponding to the roof lining 59 of Figure 5 is required. A slidable sun shade 50 is provided, similar to that shown in Figures 2 and 3.

As shown in Figure 6, there could be two separate slidable panels 50.

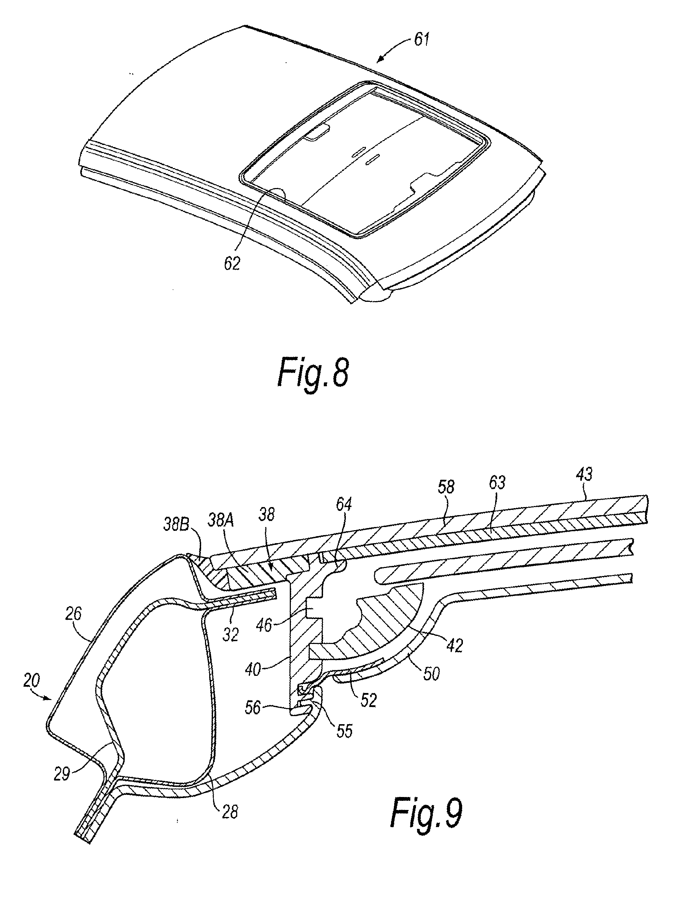

Figure 8 shows a roof type 61 in which the roof is black (or otherwise light-blocking) but also has an opening 62, closable by a transparent panel.

Figure 9 shows a cross-section through the roof, corresponding to those shown in Figures 2,3,5 and 7. In this case, the cross-section is taken through the part of the roof 61 where the roof is black.

As shown, the roof type 61 comprises a panel 58, similar to that shown in Figures 5 and 7, which extends across the full width of the roof and is supported on each side in the same way as shown in Figures 2,3,5 and 7. Again, the roof panel 58 is preferably made of transparent polycarbonate (or glass etc.). In order to provide this part of the roof with the required black appearance, a laminate sheet or film 63 is placed on the underside of the panel 58 and held between the panel 58 and a lip 64 on the support 40 and/or a coating, foil, sheet or film 43 is applied to the top side of the panel 58.

The roof opening 62 is closable by a transparent roof panel 66 which has the same form as the roof panel 25A shown in Figures 2 and 3 and is slidably mounted in the same way as that roof panel. Figure 9 shows this roof panel in the "open" position - that is, it has been slid away from the opening 62 (Figure 8), so that the slot 46 (see Figure 3A) guides the roof panel 66 rearwardly and downwardly, under the fixed roof panel 58.

As before, a slidable sunshield 50 is provided.

The polycarbonate roof panels may be produced by injection-moulding. In order to protect them from scratching, they may also be provided with special hard transparent coatings, on one or on both sides. It is a simple matter to attach the sealing and securing strip 38 and the support 40 to the panels by polyurethane bonding or a similar process. Apertures may be formed in the panels by means of water-jet cutting.

As shown in the drawings, the vehicle roof arrangement described uses the same sealing, securing and support structure for all the different roof types. This greatly simplifies tooling, construction and manufacturing, and also rationalises spare part handling and supply. The use of polycarbonate provides weight and cost reduction, and also enables the addition of other features such as the addition of logos or other decoration. Conveniently, the (preferably readily removable) coating, foil, sheet or film 43 carries such logos.

It will be apparent that the roof panel may be provided with other colouring, instead of black, including multi-colouring.

It in other embodiments (not shown), the moveable panel 25A may be tiltable into a "vent" position in addition to or as an alternative to being slidable. In a further embodiment (not shown), the panel 25A may form a "targa" roof - that is, the panel 25A may be readily removable, leaving an opening in the roof, when desired.

## Claims

1. A vehicle roof arrangement, comprising roof sealing, securing and supporting means for sealing, securing and supporting any one of a plurality of predetermined different roof types on and with respect to a roof opening in a predetermined vehicle roof structure, the roof supporting, sealing and securing means having the same configuration for each of the roof types.

2. An arrangement according to claim 1, in which the roof sealing, securing and supporting means includes guiding means adapted to guide a slidable panel of one or more of the roof types for opening and closing an aperture thereof.

3. An arrangement according to claim 1 or 2, in which the roof sealing, securing and supporting means includes guiding means for guiding a panel slidable relative to the roof type such as for sun shading purposes.

4. An arrangement according to any preceding claim, in which the roof sealing, securing and supporting means is bonded to one or more panels forming at least part of a particular one of the predetermined different roof types, the said means being adapted to be bonded to the vehicle roof structure to secure the roof type with respect to the opening roof.

5. An arrangement according to any preceding claim, in which the roof panels of the predetermined different roof types are made of polycarbonate material.

6. A roof arrangement according to claim 5, in which the sealing, securing and supporting means is bonded to the polycarbonate material.

7. An arrangement according to claim 6, in which the sealing, securing and supporting means is bonded to the polycarbonate material by polyurethane bonding.

8. An arrangement according to any one of claims 5 to 7, in which a coating, covering or sheet is applied to or mounted adjacent to at least part of the polycarbonate material to reduce or block light transmission therethrough.

9. An arrangement according to claim 8, in which the coating, covering or sheet is black or of another colour.

10. An arrangement according to any preceding claim, in which the securing, sealing and supporting means comprises first and second parts, the first part being for carrying out a securing and sealing function and the second part being for carrying out a supporting function, the first part comprising material having integral relatively hard and relatively softer portions, the relatively hard portion providing a first surface for bonding to at least part of a panel of each of the different roof types and a second surface for bonding to part of the vehicle roof structure to secure the roof type thereto, and the relatively softer part extending along an edge of the panel to provide a seal between that edge and the vehicle roof structure.

11. An arrangement according to claim 10, in which the second part is made of relatively rigid material which extends away from the said panel when the first part is secured thereto, the second part being adapted to carry out a supporting function in relation to each of the predetermined different roof types.

12. An arrangement according to claim 11, in which the second part supports a slidably movable roof panel of at least one of the roof types.

13. An arrangement according to claim 12, including a guide member secured to the slidably movable roof panel and having a formation slidably engaging a formation on and extending along the second part.

14. An arrangement according to claim 13, in which the formation on the second part is a slot.

15. An arrangement according to claim 13 or 14, in which the guide member is secured to the slidably movable panel by being bonded thereto.

16. An arrangement according to claim 11, in which the second part supports a sheet extending adjacent to a roof panel of at least one of the roof types for reducing or blocking the transmission of light therethrough.

17. An arrangement according to any one of claims 11 to 16, in which the second part is adapted for slidably guiding a secondary panel-shaped member which is slidable relative to a panel of at least one of the roof types such as for carrying out a sun-shading function.

18. An arrangement according to any one of claims 11 to 17, in which the second part is adapted to support part of the vehicle trim adjacent the vehicle roof structure.
